# EUROPÄISCHE PATENTSCHRIFT

(11) **EP 2 770 133 B1**
(45) Veröffentlichungstag und Bekanntmachung des Hinweises auf die Patenterteilung: **15.02.2017**
(21) Anmeldenummer: 14155691.0
(22) Anmeldetag: 19.02.2014
(51) Int. Cl.: E04D 13/10, F24J 2/52

(54) **Aufdach-Befestigungsvorrichtung**
Roof attachment device
Dispositif de fixation sur toiture

(30) Priorität: 22.02.2013 AT 5002113 U
(43) Veröffentlichungstag der Anmeldung: 27.08.2014
(73) Patentinhaber: Neuwirth, Martin, 4550 Kremsmünster (AT)
(72) Erfinder: Neuwirth, Martin, 4550 Kremsmünster (AT)
(74) Vertreter: Vinazzer, Edith

(56) Entgegenhaltungen:
- DE-U1- 29 911 099
- DE-U1-202012 101 578
- GB-A- 2 423 786
- JP-A- 2006 089 978

## Beschreibung

Die Erfindung betrifft eine Aufdach-Befestigungsvorrichtung für die Aufdach-Montage von auf einem geneigten Dach montierbaren Einrichtungen, wie Solarmodule, Solarkollektoren oder Photovoltaikmodule, mit einem Basishaken zur Verbindung mit der Dachunterkonstruktion, mit einem mit diesem verbindbaren Dacheindeckungselement und mit einem Befestigungselement zur Montage der Einrichtung, wobei der Basishaken in Draufsicht im Wesentlichen H-förmig mit zwei an jeweils einer Dachlatte anschraubbaren Querschenkeln und einem Verbindungsschenkel ausgebildet ist, wobei vom Verbindungsschenkel das Befestigungselement abragt und wobei das Dacheindeckungselement als Abdeckhaube ausgeführt ist, welche den Basishaken im Wesentlichen flächig überdeckt und dem Befestigungselement übergestülpt ist, jedoch die Herstellung einer Schraubverbindung der Einrichtung oder einer Montagehilfe derselben zum Befestigungselement zulässt.

Eine Aufdach-Befestigungsvorrichtung der eingangs genannten Art ist aus der
DE 299 11 099 U1 bekannt. Bei dieser Vorrichtung ist die Abdeckhaube ein Dachsteinziegel, welcher mit Durchgrifföffnungen für kegelstumpfförmig ausgeführte Befestigungselemente versehen ist. Aus der DE 20 2006 001 782 U1 ist eine Befestigungsanordnung zur Aufdach-Montage einer auf einem geneigten Gebäudedach montierbaren Einrichtung bekannt, welche ein Dacheindeckungselement mit einem an dessen äußerer Oberfläche befestigten Montageelement sowie mit einem an der Unterseite befestigten Stützelement zur Verbindung mit der Dachunterkonstruktion aufweist. Das Dacheindeckungselement kann ein Dachziegel aus Metall oder Kunststoff oder aus einem anderen geeigneten Werkstoff sein und soll gegen einen vorhandenen Dachziegel ausgetauscht werden und gleichzeitig als Befestigungselement für ein Solarmodul oder ein anderes Dachzubehör dienen. Das auf dem Dacheindeckungselement gesondert befestigte, beispielsweise angeschraubte, Montageelement ist hakenförmig gestaltet. Das Dacheindeckungselement wird an einer einzigen Dachlatte befestigt, auf welche zur Verstärkung eine metallische Schiene aufgesetzt wird, die mit der Dachlatte verschraubt wird. Das am Dacheindeckungselement befestigte Stützelement wird von oben mittels zusätzlicher Schrauben mit der Verstärkungsschiene sowie mit der Dachlatte verschraubt. Zusätzlich wird das Dacheindeckungselement mittels weiterer Schrauben, welche sowohl das Montageelement als auch das Stützelement durchdringen, befestigt. Die vielen Bauteile und deren Verschraubung gestalten die Handhabung und Montage der bekannten Anordnung aufwändig. Darüber hinaus sind die vielen Schraubverbindungen Schwachstellen der gesamten Anordnung, die die Stabilität und die Haltbarkeit der Anordnung beeinträchtigen.

Aus der DE 10 2005 043 957 B3 ist ein Dachhaken zur Montage von Solaranlagenmodulen auf Dächern bekannt, welcher einteilig durch Aluminium-Druckguss hergestellt ist und einen im Wesentlichen U-förmigen Halteabschnitt zur Befestigung der Montagekonstruktion eines Solaranlagenmoduls sowie einen Befestigungsabschnitt zum Verschrauben des Dachhakens an einer Dachlatte aufweist. Die Verwendung solcher Montagehaken erfordert ein Ausschneiden der umgebenden Dachziegel mit einem Winkelschleifer, was ein sehr arbeitsintensiver Vorgang ist und die Dachziegel schwächt, sodass die Bruchgefahr, etwa bei Schneelast, steigt. Bei der Montage dieses bekannten Dachhakens ist die jeweilige Stärke der Dachlattung oft mit Unterlagsplatten oder Holzteilen auszugleichen. Auch diese Maßnahme trägt zu einer zeitintensiven und umständlichen Montage bei. Derartige Dachhaken sind ferner konstruktionsbedingt nur mit vergleichbar geringer Drucklast belastbar und neigen bei hoher Drucklast zum Brechen.

Der Erfindung liegt die Aufgabe zugrunde, eine Aufdach-Befestigungsvorrichtung zur Verfügung zu stellen, welche eine wesentlich höhere Drucklast aufnehmen kann als die herkömmlichen, aus dem Stand der Technik bekannten Vorrichtungen, welche ferner unmittelbar auf den üblichen Dachlatten ohne den Einsatz von ausgleichenden Elementen befestigbar ist, mit geringem Montageaufwand am Dach anordenbar ist und kein Ausschneiden von Ziegeln erfordert.

Gelöst wird die gestellte Aufgabe erfindungsgemäß dadurch, dass das Befestigungselement an der einen Längskante des Verbindungsschenkels senkrecht zu diesem abragt, wobei die Abdeckhaube einen im Wesentlichen rechteckigen aus Blech bestehenden Abdeckteil und eine Umhüllung für das Befestigungselement aufweist, welche weitgehend an die Form des Befestigungselementes angepasst ist.

Durch die H-Form des Basishakens ist dieser sehr stabil und mit hoher Tragkraft ausführbar und lässt sich mittels seiner beiden Querschenkel an zwei benachbarten Dachlatten verschrauben. Zur hohen Stabilität des Basishakens trägt ferner bei, dass das Verbindungselement als Bestandteil des Basishakens ohne gesonderte Schraubverbindung oder dergleichen ausgebildet ist. Abgedeckt wird der Basishaken mit der Abdeckhaube, die eine Schraubverbindung der Montagekonstruktion der am Dach zu befestigenden Einrichtung zum Verbindungselement gestattet. Die Abdeckhaube wird in einer derartigen Größe ausgeführt, dass sie insbesondere einen Ziegel der Dachdeckung ersetzt. Dadurch, dass das Befestigungselement an der einen Längskante des Verbindungsschenkels angeordnet ist und senkrecht zu diesem abragt, kann das Befestigungselement besonders einfach einteilig mit dem Verbindungsschenkel und damit als Bestandteil des Basishakens ausgeführt werden. Diese Ausführung ist daher auch sehr günstig für die Stabilität des Basishakens. Die Abdeckhaube kann auf unauffällige und trotzdem sehr zweckmäßige Weise einen Dachziegel ersetzen.

Bei einer bevorzugten Ausführungsform der Erfindung ist der eine Querschenkel des Basishakens mit einem L-förmigen Querschnitt versehen und mit dem Verbindungsschenkel derart verbunden, dass er einen gegenüber dem anderen Querschenkel höhenversetzten Befestigungsabschnitt aufweist. Diese Ausführung des Basishakens ermöglicht ein Einhängen von Dachziegeln in jener Dachlatte, an welcher der Basishakenschenkel mit dem L-förmigen Querschnitt angeschraubt ist.

Zur Verbindung der am Dach zu montierenden Einrichtung mit dem Befestigungselement ist dieses mit einem im Wesentlichen senkrecht zum Verbindungsschenkel verlaufenden Langloch versehen. Das Langloch erlaubt eine gewisse Höhenverstellung der Abdeckhaube, die an dieser Stelle lediglich mit einem Loch zum Durchstecken einer Befestigungsschraube oder dergleichen versehen ist.

Das Befestigungselement ist ferner vorteilhafterweise ein insbesondere ebener und flächiger Bestandteil des Basishakens und weist an seiner Basis beim Verbindungsschenkel seine größte Breite auf. Auch diese Ausführung des Befestigungselementes trägt zur hohen Belastbarkeit desselben bei.

Vorteilhaft ist ferner eine Ausführung, bei der der Abdeckteil der Abdeckhaube mit einer streifenförmigen Schürze aus einem verformbaren Material, beispielsweise aus Blei, verlängert ist. Die Schürze kann auf geeignete Weise am Abdeckteil befestigt sein und wird insbesondere etwas breiter als der Abdeckteil ausgeführt. Die Schürze überdeckt bei aufgebrachter Abdeckhaube den oberen Randbereich von Ziegeln der unterhalb der Aufdach-Befestigungsvorrichtung befindlichen Ziegelreihe. Sie wird an die Oberseite der Ziegel, welche sie überdeckt, angedrückt und dabei entsprechend der Ziegelform etwas verformt. Diese Maßnahme trägt dazu bei, dass die erfindungsgemäße Aufdach-Befestigungsvorrichtung auch sehr starkem Wind standhält.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Ansicht eines Basishakens einer erfindungsgemäßen Aufdach-Befestigungsvorrichtung,
Fig. 2 eine Ansicht einer Abdeckhaube der erfindungsgemäßen Aufdach-Befestigungsvorrichtung,
Fig. 3 den Basishaken in seiner Lage zur Befestigung an Dachlatten eines Gebäudedaches,
Fig. 4 einen Montageschritt,
Fig. 5 die Aufdach-Befestigungsvorrichtung mit bereits positionierter Abdeckhaube und
Fig. 6 die Aufdach-Befestigungsvorrichtung in ihrer Endposition am Dach.

Erfindungsgemäße Aufdach-Befestigungsvorrichtungen 1 sind zur Montage von nicht dargestellten Einrichtungen auf geneigten Dächern vorgesehen, welche einen Dachstuhl mit in Richtung der Dachneigung verlaufenden Sparren und darauf befestigten, parallelen Dachlatten aufweisen. In die waagrecht verlaufenden Dachlatten werden in bekannter Weise Dachziegel eingehängt. Zu den Einrichtungen, die mit Hilfe der erfindungsgemäß ausgeführten Aufdach-Befestigungsvorrichtung 1 auf dem Dach befestigt werden können, zählen Solarmodule, Solarkollektoren, Photovoltaikmodule, aber auch Klimaanlagen oder Stufen- bzw. Leiterkonstruktionen. Unter dem Begriff "Dachziegel" werden sämtliche üblichen Dacheindeckungselemente aus Ziegel, Beton, Stein und dergleichen verstanden.

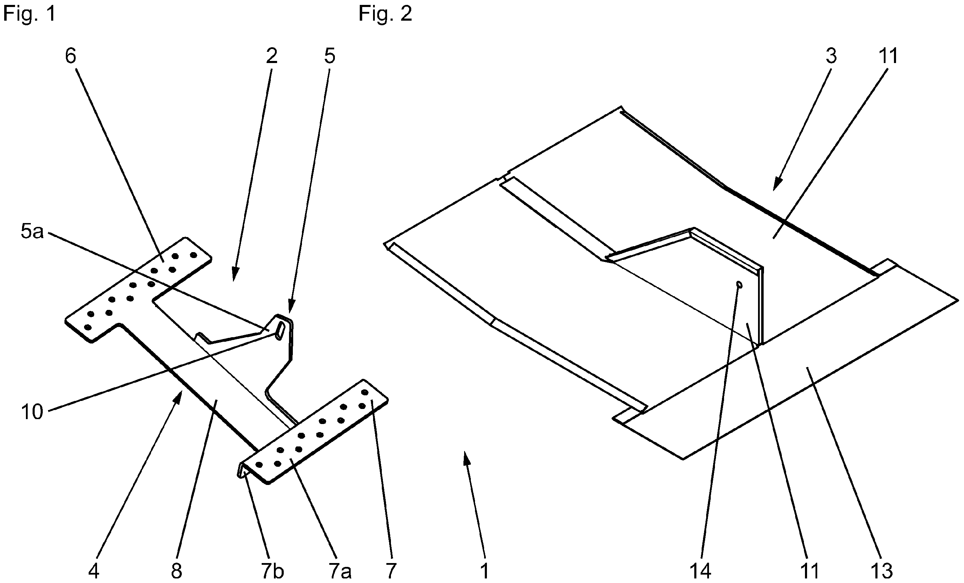

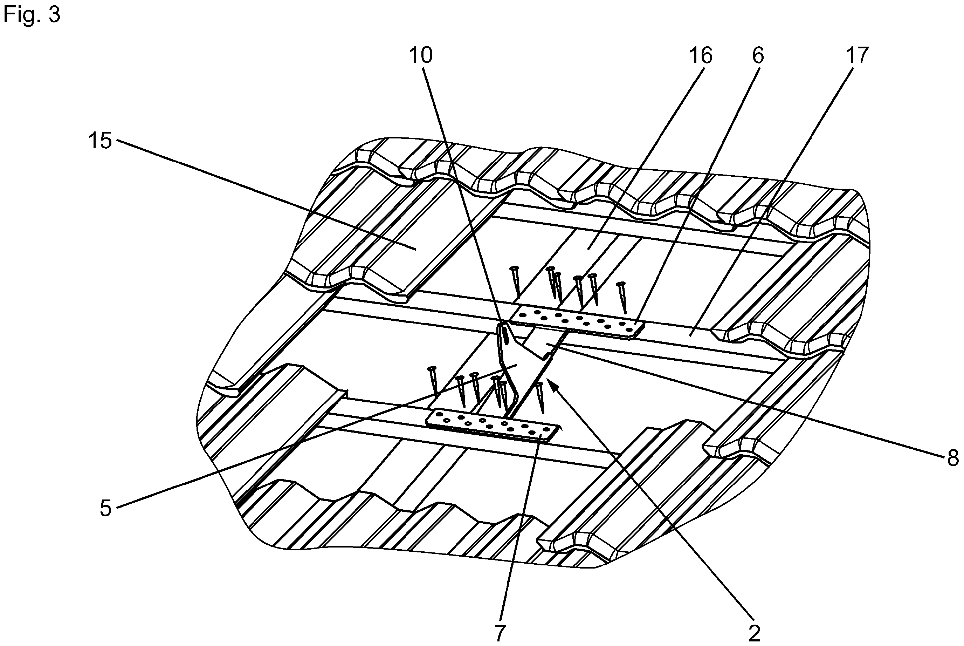

Die erfindungsgemäße Aufdach-Befestigungsvorrichtung 1 weist einen Basishaken 2 und eine Abdeckhaube 3 auf. Der Basishaken 2 ist vorzugsweise als einteiliger Bauteil, beispielsweise durch Aluminium-Druckguss, hergestellt. Wie insbesondere Fig. 1 und Fig. 3 zeigen, besteht der Basishaken 2 aus einem in Draufsicht H-förmig geformten Basiselement 4 und einem Befestigungselement 5. Das Basiselement 4 weist zwei parallel zueinander verlaufende Querschenkel 6, 7 und einen Verbindungsschenkel 8 auf. Sämtliche Schenkel 6, 7, 8 sind längliche, ebene und insbesondere rechteckige Elemente, wobei der Querschenkel 6 und der Verbindungsschenkel 8 in der gleichen Ebene verlaufen. Der Querschenkel 7 weist einen L-förmigen Querschnitt und daher einen Verbindungsabschnitt 7b und einen Befestigungsabschnitt 7a auf, sodass der Befestigungsabschnitt 7a zwar parallel zum Querschenkel 6 verläuft, jedoch gegenüber dem Verbindungsschenkel 8 und dem Querschenkel 6 geringfügig höhenversetzt ist. Der Verbindungsabschnitt 7b verbindet den Befestigungsabschnitt 7a mit dem einen Ende des Verbindungsschenkels 8. Sowohl der Befestigungsabschnitt 7a des Querschenkels 7 als auch der Querschenkel 6 sind jeweils mit einer Anzahl von Befestigungslöchern 9 versehen, die ein Anschrauben des Basishakens 2 an zwei benachbarten Dachlatten einer Dachkonstruktion, wie noch beschrieben wird, gestatten. Die beiden Querschenkel 6, 7 sind ferner bezüglich des Verbindungsschenkels 8 asymmetrisch angeordnet, derart, dass der jeweils eine, den Verbindungsschenkel 8 überragende Abschnitt der Querschenkel 6, 7 etwas länger ist als der andere.

Etwa mittig zwischen den beiden Querschenkeln 6, 7 ragt an der einen Längskante 8a des Verbindungsschenkels 8 rechtwinkelig zu dessen Ebene das Befestigungselement 5 ab. Das laschenartig und insbesondere als ebenes und flächiges Element ausgeführte Befestigungselement 5 ist, ähnlich einem Dreieck, an seiner Basis - dem Übergang zum Verbindungsschenkel 8 - breiter ausgeführt als an seinem oberen, freien Endabschnitt 5b. Das Befestigungselement 5 kann auch eine andere als die dargestellte Gestalt aufweisen, beispielsweise rechteckig oder trapezförmig. Im Endabschnitt 5b des Befestigungselementes 5 ist ein Langloch 10 senkrecht zum Basiselement 4 verlaufend ausgebildet. Das Langloch 10 weist eine Länge von einigen Zentimetern, insbesondere zwischen 2 cm und 7 cm, auf.

Wie insbesondere Fig. 2 zeigt, weist die Abdeckhaube 3 einen im Wesentlichen flächigen Abdeckteil 11 auf, welcher, wie noch beschrieben wird, einen Dachziegel ersetzt. In den Abdeckteil 11 ist eine Umhüllung 12 integriert, welche dafür vorgesehen ist, das Befestigungselement 5 zu überdecken. Die Umhüllung 12 ist vorzugsweise an die Form des Befestigungselementes 5 angepasst und weist daher senkrecht zum Abdeckteil 11 verlaufende Seitenwände auf, welche bei der gezeigten Ausführung Trapezform besitzen. Des Weiteren dient die Umhüllung 12 als Griff beim Hantieren mit der Abdeckhaube 3. Der Abdeckteil 11 ist beispielsweise und wie gezeigt ein rechteckiger, im Wesentlichen ebener Blechteil, gefertigt aus zwei Blechteilen mit trapezförmigen Blechlaschen, sodass durch Biegen der Blechteile diese miteinander verbunden werden können und derart den Abdeckteil 11 mitsamt Umhüllung 12 bilden. An der einen, der Umhüllung 12 näherliegenden Stirnseite des Abdeckteils 11, ist eine Schürze 13 angebracht. Die Schürze 13 ist ein streifenförmiger Bauteil von insbesondere konstanter Breite, welcher den Abdeckteil 11 beidseitig um einige Zentimeter überragt und aus einem verformbaren Material, beispielsweise aus Blei, hergestellt ist. Die Breite der Schürze 13 beträgt in der Größenordnung von einigen Zentimetern. Die Umhüllung 12 ist von einem Loch 14 durchsetzt, welches derart positioniert ist, dass eine nicht gezeigte Schraube sowohl durch das Loch 14 als auch durch das Langloch 10 im Befestigungselement 5 des Basishakens 2 gesteckt werden kann. Durch das Langloch 10 kann daher die Abdeckhaube 3 in ihrer Höhe etwas verstellt und angepasst werden.

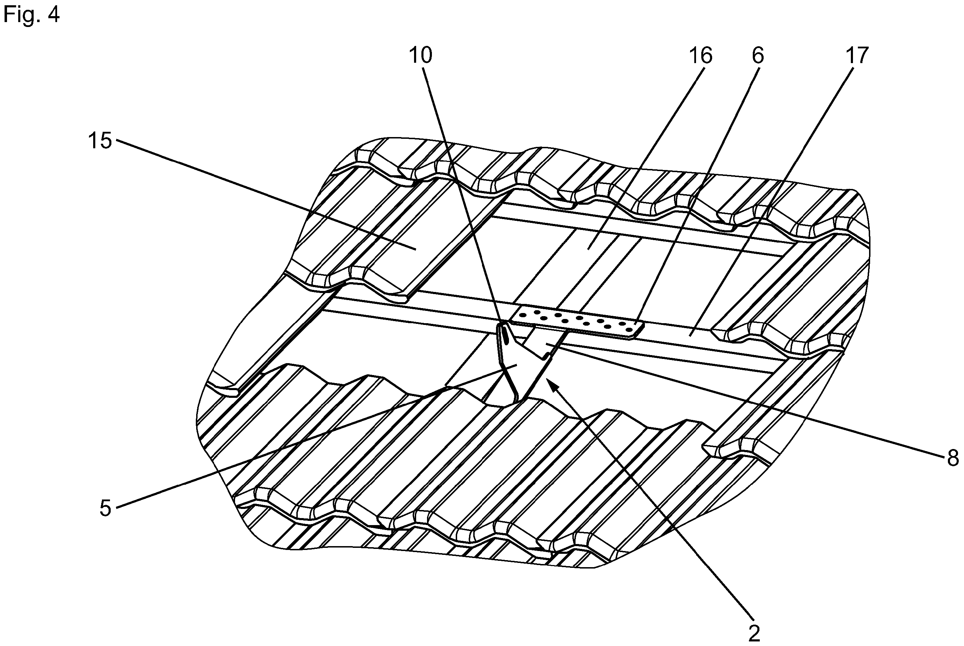

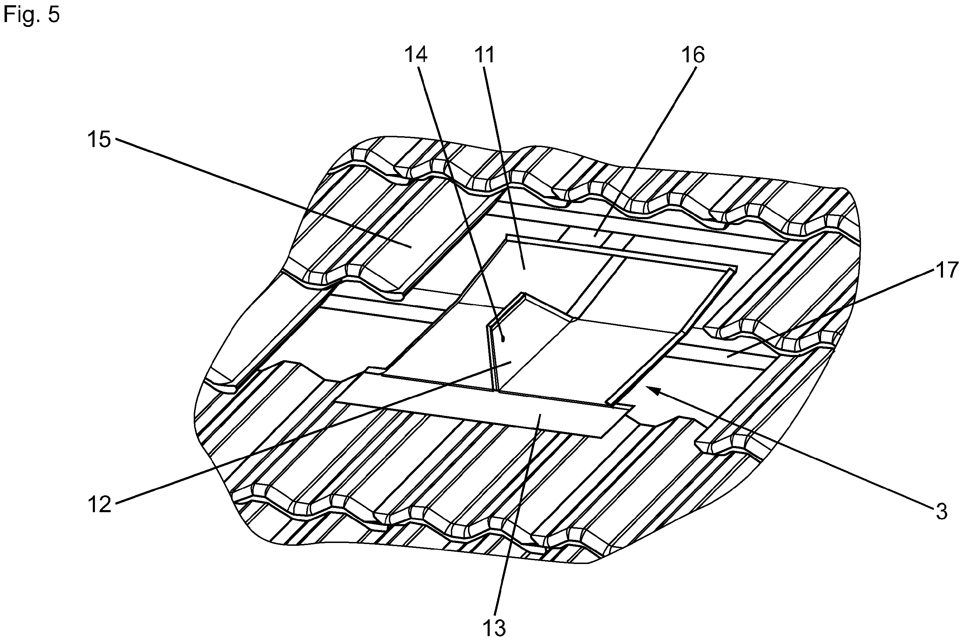

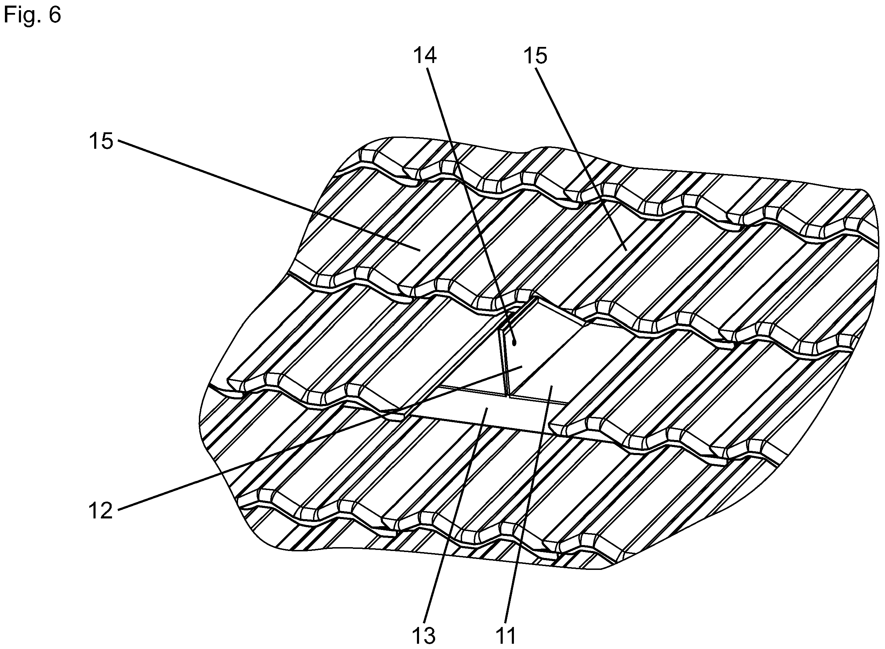

Die Montage einer erfindungsgemäßen Aufdach-Befestigungsvorrichtung 1 wird nun anhand der Figuren 3 bis 6 näher erläutert. Fig. 3 zeigt einen Ausschnitt eines mit Ziegeln 15 gedeckten herkömmlichen, geneigten Daches mit einer Dachunterkonstruktion mit Dachsparren 16 und Dachlatten 17 aus Holz. An jener Stelle, wo die Aufdach-Befestigungsvorrichtung 1 befestigt werden soll, sind aus drei Reihen einige Ziegel 15 entfernt und beiseite gelegt worden. Nun kann der Basishaken 2 an zwei benachbart verlaufenden Dachlatten 17 montiert werden. Der gegenseitige Abstand der beiden Querschenkel 6, 7 ist an den üblichen gegenseitigen Abstand von Dachlatten 17, welcher zwischen 33 cm und 36 cm beträgt, angepasst. Dabei wird der Basishaken 2 derart befestigt, dass der einen L-förmigen Querschnitt aufweisende Querschenkel 7 an der unteren Latte 17, der andere an der oberen Dachlatte 17 angeschraubt wird. Als nächstes werden die Ziegel 15 der unteren Ziegelreihe wieder eingehängt, der L-förmige Querschnitt des Querschenkels 7 erlaubt das Einhängen. Nun wird die Abdeckhaube 3 aufgesetzt, wobei die Schürze 13 den oberen Randbereich von Ziegeln 15 der unteren Ziegelreihe überdeckt. Die Schürze 13 wird nun an die Oberseite der Ziegel 15 angedrückt und dabei entsprechend der Ziegelform etwas verformt. Im letzten Schritt werden die Ziegel 15 der oberen Ziegelreihe und Ziegel 15 der mittleren Ziegelreihe wieder gesetzt, wobei mittig ein Ziegel 15 durch die Abdeckhaube 3 ersetzt ist. Am Befestigungselement 5 kann nun mittels einer Schraube, die durch das Loch 14 in der Umhüllung 12 gesteckt wird, beispielsweise ein Montageelement für die am Dach anzuordnende Einrichtung befestigt werden.

Die Basishaken von erfindungsgemäßen Aufdach-Befestigungsvorrichtungen 1

Halten einer wesentlich größeren Drucklast stand als die herkömmlichen, aus dem Stand der Technik bekannten Haken. So wurde beispielsweise festgestellt, dass ein Basishaken der erfindungsgemäßen Aufdach-Befestigungsvorrichtung 1 eine Drucklast von mindestens 1000 kg aufnehmen kann ohne sich dauerhaft zu verformen. Dadurch ist es möglich, die Anzahl der beispielsweise für die Montage von Solarmodulen sonst erforderlichen Haken um die Hälfte zu reduzieren, womit eine deutliche Reduktion des Montageaufwandes einhergeht. Verantwortlich für die hohe Drucklastaufnahme ist die einfache Konstruktion des Basishakens als in Draufsicht im Wesentlichen H-förmiger Bauteil. Ein weiterer Vorteil der erfindungsgemäßen Aufdach-Befestigungsvorrichtung besteht darin, dass diese direkt auf die Dachlatten geschraubt werden und durch ihre Auflageflächen seitlich nicht kippen. Die höhenverstellbare Abdeckhaube gleicht die unterschiedliche Wölbungshöhe der üblichen Ziegel aus und ersetzt einen kompletten Dachziegel.

### Bezugsziffernliste

- 1: Aufdach-Befestigungsvorrichtung
- 2: Basishaken
- 3: Abdeckhaube
- 4: Basiselement
- 5: Befestigungselement
- 5b: Endabschnitt
- 6: Querschenkel
- 7: Querschenkel
- 7a: Befestigungsfläche
- 7b: Verbindungsabschnitt
- 8: Verbindungsschenkel
- 8a: Längskante
- 9: Befestigungsloch
- 10: Langloch
- 11: Abdeckteil
- 12: Umhüllung
- 13: Schürze
- 14: Loch
- 15: Ziegel
- 16: Dachsparren
- 17: Dachlatte

## Patentansprüche

1. Aufdach-Befestigungsvorrichtung (1) für die Aufdach-Montage von auf einem geneigten Dach montierbaren Einrichtungen, wie Solarmodule, Solarkollektoren oder Photovoltaikmodule, mit einem Basishaken (2) zur Verbindung mit der Dachunterkonstruktion, mit einem mit diesem verbindbaren Dacheindeckungselement und mit einem Befestigungselement (5) zur Montage der Einrichtung, wobei der Basishaken (2) in Draufsicht im Wesentlichen H-förmig mit zwei an jeweils einer Dachlatte (17) anschraubbaren Querschenkeln (6, 7) und einem Verbindungsschenkel (8) ausgebildet ist, wobei vom Verbindungsschenkel (8) das Befestigungselement (5) abragt und wobei das Dacheindeckungselement als Abdeckhaube (3) ausgeführt ist, welche den Basishaken (2) im Wesentlichen flächig überdeckt und dem Befestigungselement (5) übergestülpt ist, jedoch die Herstellung einer Schraubverbindung der Einrichtung oder einer Montagehilfe derselben zum Befestigungselement (5) zulässt,
**dadurch gekennzeichnet,dass**
das Befestigungselement (5) an der einen Längskante (8a) des Verbindungsschenkels (8) senkrecht zu diesem abragt, wobei die Abdeckhaube (3) einen im Wesentlichen rechteckigen, aus Blech bestehenden Abdeckteil (11) mit einer Umhüllung (12) für das Befestigungselement (5) aufweist, welche weitgehend an die Form des Befestigungselementes (5) angepasst ist.

2. Aufdach-Befestigungsvorrichtung nach Anspruch 1, **dadurch gekennzeichnet, dass** der eine Querschenkel (7) des Basishakens (2) einen L-förmigen Querschnitt aufweist und mit dem Verbindungsschenkel (8) derart verbunden ist, dass er einen gegenüber dem anderen Querschenkel (6) höhenversetzten Befestigungsabschnitt (7a) aufweist.

3. Aufdach-Befestigungsvorrichtung nach Anspruch 1 oder 2, **dadurch gekennzeichnet, dass** das Befestigungselement (5) ein im Wesentlichen senkrecht zum Verbindungsschenkel (8) verlaufendes Langloch (10) aufweist.

4. Aufdach-Befestigungsvorrichtung nach einem der Ansprüche 1 bis 3, **dadurch gekennzeichnet, dass** das Befestigungselement (5) ein insbesondere ebener und flächiger Bestandteil des Basishakens (2) ist und an seiner Basis beim Verbindungsschenkel (8) seine größte Breite aufweist.

5. Aufdach-Befestigungsvorrichtung nach einem der Ansprüche 1 bis 4,
**dadurch gekennzeichnet, dass** in der Umhüllung (12) ein Befestigungsloch (14) ausgebildet ist, welches bei positionierter Abdeckhaube (3) mit dem Langloch (10) im Befestigungselement (5) in Deckung kommt bzw. bringbar ist.

6. Aufdach-Befestigungsvorrichtung nach einem der Ansprüche 1 bis 5, **dadurch gekennzeichnet, dass** der Abdeckteil (11) der Abdeckhaube (3) mit einer streifenförmigen Schürze (13) aus einem verformbaren Material, beispielsweise Blei, verlängert ist.

7. Aufdach-Befestigungsvorrichtung nach Anspruch 6, **dadurch gekennzeichnet, dass** die Schürze (13) am Abdeckteil (11) befestigt ist und diesen seitlich überragt.

## Claims

1. Rooftop fastening device (1) for the rooftop mounting of installations which can be mounted on a sloping roof, such as solar modules, solar collectors or photovoltaic modules, with a base hook (2) for attaching to the roof substructure, with a roof covering element attachable to said basic hook and with a fastening element (5) to mount the installation, wherein the base hook (2), in plan view, is formed essentially in the shape of a letter H with two transverse arms (6, 7), each of which can be screwed to a roof batten (17), and a connecting arm (8), wherein the fastening element (5) projects away from the connecting arm (8) and wherein the roof covering element is designed as a cover plate (3) which lies essentially flat over the base hook (2) and is placed over the fastening element (5) but which allows a screwed connection to be made between the installation, or a mounting aid of the installation, and the fastening element (5),
**characterised in that**
the fastening element (5) on the long side (8a) of the connecting arm (8) projects away from said arm, wherein the cover plate (3) has an essentially rectangular cover part (11) consisting of lead and with a sheath (12) for the fastening element (5), said sheath being designed to largely match the shape of the fastening element (5).

2. Rooftop fastening device according to claim 1, **characterised in that** a transverse arm (7) of the base hook (2) has an L-shaped cross section and is connected to the connecting arm (8) in such a way that it has a fastening section (7a) with is offset higher than the other transverse arm (6).

3. Rooftop fastening device according to claim 1 or 2, **characterised in that** the fastening element (5) has an elongated hole (10) running essentially vertically to the connecting arm (8).

4. Rooftop fastening device according to any one of claims 1 to 3, **characterised in that**
the fastening element (5) is a particularly level and planar component of the base hook (2) and is widest at its base where it meets the connecting arm (8).

5. Rooftop fastening device according to any one of claims 1 to 4, **characterised in that** a fastening hole (14) is formed in the sheath (12) which covers, or can be aligned with the elongated hole (10) in the fastening element (5) when the cover plate (3) has been positioned.

6. Rooftop fastening device according to any one of claims 1 to 5, **characterised in that**
the cover part (11) of the cover plate (3) is extended with a strip-shaped apron (13) made from a deformable material, such as lead.

7. Rooftop fastening device according to claim 6, **characterised in that** the apron (13) is fastened to the cover part (11) and extends laterally beyond it.

## Revendications

1. Dispositif de fixation de toiture (1) pour le montage d'une toiture à partir de fixations pouvant être installées sur un toit incliné, comme des panneaux solaires, des collecteurs solaires ou des panneaux photovoltaïques, avec un crochet de base (2) pour assurer une liaison avec une infrastructure de toit, pourvu d'un élément de couverture de toit pouvant être connecté audit crochet et d'un élément de fixation (5) pour le montage du dispositif, où le crochet de base (2) est, vu de dessus, principalement en forme de H avec deux bras transversaux (6, 7) pouvant être vissés à respectivement une latte de toit (17) et avec un bras de liaison (8), où l'élément de fixation (5) dépasse du bras de liaison (8) et où l'élément de couverture de toit prend la forme d'une hotte de couverture (3), qui recouvre le crochet de base (2) principalement bien à plat et est appliqué sur l'élément de fixation (5), tout en permettant la fabrication d'un raccord vissé de l'installation ou d'un élément de montage de celui-ci avec l'élément de fixation (5),
**caractérisé en ce que** l'élément de fixation (5) dépasse d'une tranche longitudinale (8a) du bras de liaison (8) perpendiculairement à celui-ci, où la hotte de couverture (3) présente une partie couverture (11) principalement à angle droit, composée de tôle, revêtue d'une gaine (12) pour l'élément de fixation (5), gaine adaptée dans une large mesure à la forme de l'élément de fixation (5).

2. Dispositif de fixation de toiture selon la revendication 1, **caractérisé en ce que** l'un des bras transversaux (7) du crochet de base (2) présente une section en forme de L et est connecté au bras de liaison (8) de telle sorte ledit bras présente une section de fixation (7a) décalé en hauteur par rapport à l'autre bras transversal (6).

3. Dispositif de fixation de toiture selon la revendication 1 ou la revendication 2, **caractérisé en ce que** l'élément de fixation (5) présente un trou longitudinal (10) s'étendant principalement à la verticale par rapport au bras de liaison (8).

4. Dispositif de fixation de toiture selon l'une des revendications 1 à 3, **caractérisé en ce que** l'élément de fixation (5) est un composant en particulier plan et plat du crochet de base (2) et dont la largeur est maximale au niveau de sa base près du bras de liaison (8).

5. Dispositif de fixation de toiture selon l'une des revendications 1 à 4, **caractérisé en ce qu'**un trou de fixation (14) est prévu dans la gaine (12), qui recouvre ou peut recouvrir le trou longitudinal (10) dans l'élément de fixation (5) lorsque la hotte de couverture (3) est en place.

6. Dispositif de fixation de toiture selon l'une des revendications 1 à 5, **caractérisé en ce que** la partie couverture (11) de la hotte de couverture (3) avec sa jupe (13) en forme de bande se prolonge à partir d'un matériau déformable, probablement en plomb.

7. Dispositif de fixation de toiture selon la revendication 6, **caractérisé en ce que** la jupe (13) est fixée sur la partie couverture (11) et dépasse de celle-ci latéralement.
